# EUROPÄISCHE PATENTSCHRIFT

(11) **EP 1 424 239 B1**
(45) Veröffentlichungstag und Bekanntmachung des Hinweises auf die Patenterteilung: **29.07.2009**
(21) Anmeldenummer: 03090352.0
(22) Anmeldetag: 17.10.2003
(51) Int. Cl.: B60N 2/427, B60N 2/42, B60N 2/30

(54) **Crashsichere Wickelsicherung**
Crash protection element
Elément de protection en cas d'accident

(30) Priorität: 26.11.2002 DE 10255979
(43) Veröffentlichungstag der Anmeldung: 02.06.2004
(73) Patentinhaber: Volkswagen AG, 38436 Wolfsburg (DE)
(72) Erfinder: Thill, Marc, 38557 Osloss (DE); Feichter, Egon, Dr., 38442 Wolfsburg (DE)
(74) Vertreter: Schneider, Henry

(56) Entgegenhaltungen:
- DE-A1- 10 043 348
- DE-A1- 10 046 512
- DE-C1- 10 051 094
- US-A- 4 565 407
- US-A- 5 634 686
- US-A- 6 158 799
- US-B1- 6 179 363
- US-B1- 6 382 491
- PATENT ABSTRACTS OF JAPAN Bd. 1999, Nr. 14, 22. Dezember 1999 (1999-12-22) & JP 11 245697 A (MAZDA MOTOR CORP), 14. September 1999 (1999-09-14)

## Beschreibung

Die Erfindung betrifft eine Sicherungsvorrichtung zur Lagefixierung mindestens eines Bauteiles, insbesondere hochgeklappten Teilen eines Kraftfahrzeugsitzes, in der Nichtgebrauchslage, mit mindestens einer Anbindung der Sicherungsvorrichtung an dem Bauteil, insbesondere an einem Sitzteil des Kraftfahrzeugsitzes, mit den im Oberbegriff des Anspruchs 1 genannten Merkmalen.

Es ist bekannt, Bauteile, insbesondere Fahrzeugsitze zur Gewinnung eines zusätzlichen Nutzraumes für den Gütertransport, hochzuklappen. Insbesondere kommt hierfür die hintere Sitzreihe eines Kraftfahrzeuges in Betracht. Bei dem Hochklappen des Fahrzeugsitzes wird der Fahrzeugsitz aus der Gebrauchslage in eine Nichtgebrauchslage geklappt. In der Regel erfolgt ein Hochklappen des Fahrzeugsitzes dadurch, dass das Sitzteil des Fahrzeugsitzes an seinem Vorderteil am Fahrzeugboden schwenkbar angelenkt ist, wobei die Rückenlehne durch einen Seitenbeschlag an beiden Seiten des Sitzteiles klappbar angeordnet ist. Das Hochklappen des Fahrzeugsitzes erfolgt derart, dass zunächst nach Lösung einer entsprechenden Arretierung die Rücklehne des Fahrzeugsitzes auf das Sitzteil umgeklappt wird. Danach werden die Rückenlehne und das Sitzteil zusammen um den am Vorderteil des Fahrzeugsitzes angeordneten Schwenkpunkt hochgeklappt beziehungsweise umgeschwenkt.

Ein Nachteil dieser Klapp- beziehungsweise Schwenkvorrichtung besteht darin, dass zum Hochklappen des Fahrzeugsitzes beziehungsweise der Fahrzeugsitze der Fahrzeugnutzer das gesamte Sitzgewicht anheben muss, um den Klappvorgang durchzuführen.

Bekannt ist weiterhin, eine Lagesicherung des hochgeklappten Fahrzeugsitzes in der Nichtgebrauchslage durch eine manuell anzubringende separate Sicherungsstange vorzunehmen. Dabei bleibt es dem/den Fahrzeugnutzer(n) überlassen, die Sicherungsstange vor Antritt der Fahrt ordnungsgemäß anzubringen. Nachträglich anzubringende Sicherungsstangen haben den Nachteil, dass oftmals von dem/den Fahrzeugnutzer(n) versäumt wird, die Sicherung des Fahrzeugsitzes oder die Befestigung der Sicherungsstange an dem Fahrzeugsitz und/oder an geeigneten Fahrzeugteilen ordnungsgemäß vorzunehmen. Die Folge eines nicht lagegesicherten hochgeklappten Fahrzeugsitzes können Beschädigungen des Transportgutes oder sogar Personenschäden sein.

Bekannt sind ferner Gummibänder, mit denen ein Fahrzeugsitz in der hochgeklappten Lage fixiert wird. Das Gummiband wird dabei allgemein am Vordersitz, zum Beispiel an den Stangen der Kopfstützen, befestigt. Nachteilig hierbei ist, dass einerseits die Befestigung des Gummibandes am Vordersitz manuell vorgenommen werden muss und weiterhin die Lagefixierung eines Fahrzeugsitzes mittels eines Gummibandes beim Einwirken größerer Kräfte auf den Fahrzeugsitz, wie es bei einem Crash des Fahrzeuges der Fall ist, keine ausreichende Sicherheit hinsichtlich der Stabilität der Lagesicherung bietet.

Die Offenlegungsschrift DE 100 46 512 A1 beschreibt als weiteren Stand der Technik eine Sicherungsvorrichtung zur Lagefixierung von insbesondere hochgeklappten Teilen eines Fahrzeugsitzes in der Nichtgebrauchslage mit mindestens einer Anbindung an einem Teil des Fahrzeuges. Dazu ist die Sicherungsvorrichtung einerseits mit einem Grundkörper eines Sitzteiles des Fahrzeugsitzes über mindestens ein Drehgelenk ständig verbunden. Beim Hochklappen des Sitzteiles des Fahrzeugsitzes in seine Nichtgebrauchslage ist die Sicherungsvorrichtung selbsttätig in ihre Funktionslage klappbar und in dieser Funktionslage selbsttätig durch ein Arretierungsteil fixierbar. Dabei stützt sich die Sicherungsvorrichtung auf einem Teil des Fahrzeugbodens ab und nach dem Herunterklappen des Sitzteiles in seine Gebrauchslage wird die Sicherungsvorrichtung in einer eingeklappten Position zur Aufbewahrung unterhalb des Sitzteiles des Fahrzeugsitzes angeordnet. Diese Sicherungsvorrichtung benötigt nach Lagefixierung in ihre Nichtgebrauchslage zur Sicherung jeweils aufwendige Arretierungsteile, entweder einen Anschlag bei einer Ausführung mit einem Stützblech oder eine Gelenksperre oder eine Rastklinke bei einer Ausführung mit einer Sicherungsstange. Ferner ist zur Führung des Stützbleches beziehungsweise der Sicherungsstange eine entsprechende Anzahl von Drehgelenken am Grundkörper notwendig, die am Fahrzeugboden befestigt werden müssen, die sich dort störend auswirken. Zudem muss beim Überführen des hochgeklappten Fahrzeugsitzes von der Nichtgebrauchslage in die Gebrauchslage zunächst die Sicherungsvorrichtung gelöst werden, wodurch der Fahrzeugnutzer einen zusätzlichen manuellen Aufwand in Kauf nehmen muss.

Ferner beschreibt die Patentschrift US 4,565,407 eine Haltevorrichtung eines auf einer Plattform aufgebauten Sitzes, der gemeinsam mit der Plattform gegenüber einem Fahrzeugrahmen aus einer Betriebsstellung in eine Wartungsstellung schwenkbar ist. Die Plattform weist eine vorgespannte Rasten-Klinke-Verbindung bestehend aus einer Strebe und einem mit Rasterstellungen versehenen Führungsschlitz auf, so dass die Plattform mit dem Sitz in einer Vielzahl von Stellungen, die jeweils einer Rasterstellung entsprechen, arretiert werden kann. Ferner ist eine vom Sitz aus bedienbare Lösevorrichtung vorgesehen, mit deren Hilfe die Strebe außer Eingriff mit der jeweiligen Rasterstellung gebracht werden kann.

Der Erfindung liegt daher die Aufgabe zugrunde, eine Sicherungsvorrichtung der eingangs genannten Art zu schaffen, die beim Hochklappen eines Bauteiles, insbesondere eines Sitzteiles und einer Rückenlehne, von der Gebrauchslage in eine Nichtgebrauchslage ohne Betätigung durch eine Bedienperson zwangsläufig eine verriegelte Funktionslage einnimmt und damit eine stabile und sichere Lagefixierung des Sitzteiles und der Rückenlehne ermöglicht.

Diese Aufgabe wird durch eine Sicherungsvorrichtung zur Lagefixierung von mindestens einem hochklappbaren Teil eines Kraftfahrzeugsitzes, in einer Nichtgebrauchslage, mit mindestens einer Anbindung der Sicherungsvorrichtung an dem hochklappbaren Teil, insbesondere einem Sitzteil des Kraftfahrzeugsitzes, mit den in dem unabhängigen Anspruch 1 genannten kennzeichnenden Merkmalen gelöst. Dadurch, dass die Sicherungsvorrichtung an einem Grundkörper des Teiles mindestens ein drehbewegliches Element aufweist, an dem mindestens ein Stützelement angeordnet ist, und mindestens eine, an einer Karosserie angeordnete Verriegelungsvorrichtung umfasst, wodurch das mindestens eine Stützelement nach einer Bewegung des hochklappbaren Teiles von einer Gebrauchslage in die Nichtgebrauchslage in eine karosserieseitige stufenartig angeordnete Ausbildung eingreift und das hochgeklappte Teil abstützt, und wodurch das hochgeklappte Teil über die mindestens eine Verriegelungsvorrichtung verriegelbar ist, wird eine Sicherungsvorrichtung geschaffen, die bei dem Hochklappen eines Bauteiles, insbesondere eines Kraftfahrzeugsitzes, von dessen Gebrauchslage in eine Nichtgebrauchslage sicherstellt, dass der Kraftfahrzeugsitz eine stets verriegelte Funktionslage einnimmt, wodurch eine Lagefixierung, insbesondere eines Sitzteiles beziehungsweise einer zugeordneten Rückenlehne, ohne Eingreifen einer Person möglich ist.

In bevorzugter Ausgestaltung der Erfindung ist das dem Bauteil, nachfolgend beispielhaft ein Sitzteil eines Kraftfahrzeugsitzes, zugeordnete drehbewegliche Element ein Drehgelenk oder ein Scharnier. In bevorzugter Weise wird ein zumeist beidseitig des Sitzteiles angeordnetes erstes und zweites Drehgelenk oder erstes und zweites Scharnier jeweils einem ersten und zweiten Stützelement zugeordnet, welches an der dem Drehgelenk beziehungsweise dem Scharnier gegenüberliegenden Seite ein Führungselement aufweist. Dieses Führungselement ist in bevorzugter Ausführung der Erfindung eine zu dem jeweiligen Stützelement zugeordnete erste beziehungsweise zweite Rolle.

Erfindungsgemäß stützen sich die ersten und zweiten Stützelemente bei Erreichen der Nichtgebrauchslage selbsttätig in einer in einer Karosserie stufenartig angeordneten Ausbildung ab. Durch die Führungselemente, die erste und zweite Rolle, ist eine besonders einfache Bedienung und ein einfaches Schwenken des ersten beziehungsweise zweiten Stützelementes durchführbar. Zur Erreichung einer zusätzlichen Sicherheit gegen ungewolltes Umklappen des Kraftfahrzeugsitzes von der Nichtgebrauchslage in die Gebrauchslage ist zwischen einer Rückseite des Sitzteiles und der stufenartigen Ausbildung mindestens eine zusätzliche Verriegelungsvorrichtung im Bereich des Sitzteiles angeordnet. Diese mindestens eine vorhandene Verriegelungsvorrichtung umfasst entweder einen selbsttätig verriegelnden Mechanismus oder eine Person muss bewusst die Verriegelungsvorrichtung öffnen, um den Kraftfahrzeugsitz von der Nichtgebrauchslage in die Gebrauchslage klappen zu können.

Erfindungsgemäß ist ferner, dass zur Unterstützung der Klappbewegung von der Gebrauchslage in die Nichtgebrauchslage an den Stützelementen und an mindestens einem Festpunkt am Sitzteil beziehungsweise an dem Grundkörper des Sitzteiles mindestens ein Federelement angeordnet ist. Dabei besitzt das Federelement in der Gebrauchslage des Kraftfahrzeugsitzes eine Vorspannung, wodurch das Federelement während der Bewegung des Sitzteiles von einer Gebrauchslage in die Nichtgebrauchslage entspannt wird, so dass der Fahrzeugnutzer nach einer Entriegelung des Sitzteiles das Sitzgewicht des Kraftfahrzeugsitzes nur leicht anheben muss, um dann eine von dem mindestens einen Federelement unterstützte Klappbewegung von der Gebrauchslage in die Nichtgebrauchslage durchführen zu können.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Ansicht eines Kraftfahrzeugsitzes in einer Nichtgebrauchslage von der Heckseite des Kraftfahrzeuges aus betrachtet und
- Figur 2: einen Schnitt A-A durch den Kraftfahrzeugsitz in Nichtgebrauchslage.

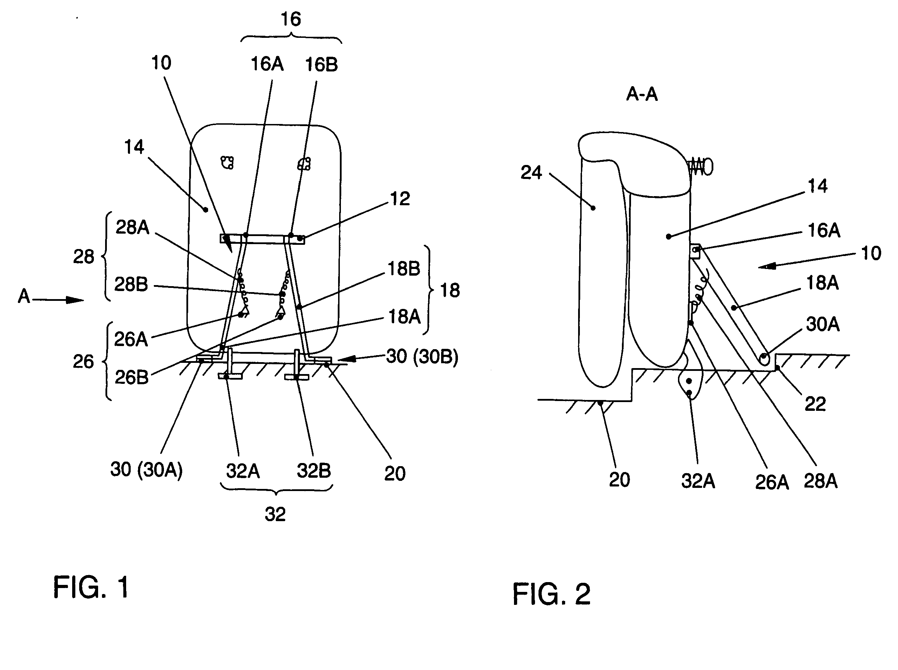

Figur 1 zeigt als ein Bauteil ein Sitzteil 14 in einer Nichtgebrauchslage mit einem an der Rückseite des Sitzteiles 14 angeordneten Grundkörper 12. An dem Grundkörper 12 sind drehbewegliche Elemente 16, ein erstes Drehgelenk 16A und ein zweites Drehgelenk 16B, angeordnet. Als drehbewegliche Elemente 16 sind ebenfalls Scharniere oder dergleichen denkbar. Am ersten Drehgelenk 16A ist ein erstes Stützelement 18A und am zweiten Drehgelenk 16B ein zweites Stützelement 18B drehbeweglich angeordnet. Die Stützelemente 18 verlaufen im Wesentlichen vertikal in Richtung einer Karosserie 20 eines Kraftfahrzeuges. Am Sitzteil 14, vorzugsweise am Grundkörper 12, befindet sich ein erster Festpunkt 26A und ein zweiter Festpunkt 26B. An jedem Festpunkt 26A, 26B ist jeweils endseitig ein erstes Federelement 28A und ein zweites Federelement 28B befestigt. Die anderen Enden des ersten Federelementes 28A und des zweiten Federelementes 28B sind in der in Figur 1 ebenfalls gezeigten Nichtgebrauchslage des Kraftfahrzeugsitzes entspannt an dem jeweiligen ersten beziehungsweise zweiten Stützelement 18A, 18B angeordnet. Das erste beziehungsweise zweite Stützelement 18A, 18B weist im Bereich der Karosserie 20 jeweils ein Führungselement 30 auf. Im gezeigten Ausführungsbeispiel in Figur 1 sind als Führungselemente eine erste Rolle 30A und eine zweite Rolle 30B dargestellt. Aus der Karosserie 20 ragen Verriegelungselemente 32 heraus, wobei hier eine erste und eine zweite Verriegelungsvorrichtung 32A und 32B angeordnet ist. Grundsätzlich reicht jedoch eine Verriegelungsvorrichtung 32 zur Erfüllung der erfindungsgemäßen Verriegelungsfunktion aus.

Die beschriebenen Teile zur Sicherung eines Kraftfahrzeugsitzes bilden in ihrer Gesamtheit eine Sicherungsvorrichtung 10 aus. Zur Sicherungsvorrichtung 10 gehören mindestens ein Festpunkt 26A oder 26B am Grundkörper 12 des Sitzteiles 14, mindestens ein drehbewegliches Element 16A oder 16B, mindestens ein Stützelement 18A oder 18B und mindestens eine stufenartige Ausbildung 22 (in Figur 1 nicht sichtbar) zur Abstützung des mindestens einen Stützelementes 18A, 18B des Kraftfahrzeugsitzes in seiner Nichtgebrauchslage in der stufenartigen Ausbildung 22 der Karosserie 20, wobei der Kraftfahrzeugsitz wahlweise mit mindestens einer Verriegelungsvorrichtung 32A, 32B verriegelbar ist.

Zur weiteren Verdeutlichung der Erfindung zeigt Figur 2 einen Schnitt A-A durch einen Kraftfahrzeugsitz wiederum in seiner Nichtgebrauchslage. Der Schnitt A-A zeigt das Sitzteil 14 in vertikaler Position und eine Rückenlehne 24 ebenfalls in vertikaler Position, die bereits zuvor auf das Sitzteil 14 geklappt worden ist. In der Seitenansicht des Schnittes A-A sind das erste Drehgelenk 16A, das erste Stützelement 18A und die erste Rolle 30A sichtbar. Beim Klappvorgang des Kraftfahrzeugsitzes von der Gebrauchslage in die Nichtgebrauchslage, unterstützt von der Vorspannung des Federelementes 28A, greift das erste Stützelement 18A bei Erreichen der vertikalen Position des Kraftfahrzeugsitzes unter Zuhilfenahme der ersten Rolle 30A in die stufenartige Ausbildung 22 ein. Damit ist der Kraftfahrzeugsitz fixiert und gegen die Karosserie 20 abgestützt. Sichtbar ist ferner der erste Festpunkt 26A am Sitzteil 14, vorzugsweise am Grundkörper 12, an dem einerseits das erste Federelement 28A befestigt ist. Das Federelement 28A ist andererseits am ersten Stützelement 18A befestigt. Erfindungsgemäß besteht die Möglichkeit, den in der Nichtgebrauchslage befindlichen Kraftfahrzeugsitz durch die erste Verriegelungsvorrichtung 32A zu verriegeln. Wie bereits aus Figur 1 ersichtlich, befindet sich hinter den sichtbaren Komponenten der Sicherungsvorrichtung 10, dem ersten Drehgelenk 16A, dem ersten Stützelement 18A, der ersten Rolle 30A und dem ersten Federelement 28A mit dem zugehörigen ersten Festpunkt 26A, eine analoge Ausführung, die aus den Teilen 16B, 18B, 26B, 28B und 30B besteht. Figur 2 zeigt zudem die Anordnung der Verriegelungsvorrichtung 32A zwischen der Rückseite des Sitzteiles 14 und der stufenartigen Ausbildung 22.

Unter der Vorgabe, dass sich das Federelement 28A in der Nichtgebrauchslage des Kraftfahrzeugsitzes in einer entspannten Lage befindet, wird die Funktionsweise des Federelementes 28A in Verbindung mit dem Stützelement 18A deutlich. Zum Klappen des Kraftfahrzeugsitzes von der Nichtgebrauchslage in die Gebrauchslage wird das Stützelement 18A aus der stufenartigen Ausbildung 22 herausgeführt und die erste Verriegelungsvorrichtung 32A betätigt. Der Bediener drückt nunmehr den Kraftfahrzeugsitz unter Zuhilfenahme bekannter Vorrichtungen gegen die Kraft des Federelementes 28A um eine nicht dargestellte Achse in Richtung der Karosserie 20. Das erste Federelement 28A wird dadurch gespannt und das Stützelement 18A bewegt sich durch die erste Rolle 30A unterstützt entlang der Karosserie 20 und klappt durch die Anordnung des ersten Drehelementes 16A unter den Kraftfahrzeugsitz, der in seiner Endposition wieder die Gebrauchsstellung einnimmt.

### BEZUGSZEICHENLISTE

- 10: Sicherungsvorrichtung
- 12: Grundkörper
- 14: Sitzteil
- 16: drehbewegliches Element
- 16A: erstes Drehgelenk
- 16B: zweites Drehgelenk
- 18: Stützelement
- 18A: erstes Stützelement
- 18B: zweites Stützelement
- 20: Karosserie
- 22: stufenartige Ausbildung
- 24: Rückenlehne
- 26: Festpunkt
- 26A: erster Festpunkt
- 26B: zweiter Festpunkt
- 28: Federelement
- 28A: erstes Federelement
- 28B: zweites Federelement
- 30: Führungselement
- 30A: erste Rolle
- 30B: zweite Rolle
- 32: Verriegelungselement
- 32A: erste Verriegelungsvorrichtung
- 32B: zweite Verrieglungsvorrichtung

## Patentansprüche

1. Sicherungsvorrichtung (10) zur Lagefixierung von mindestens einem hochklappbaren Teil eines Kraftfahrzeugsitzes in einer Nichtgebrauchslage, mit mindestens einer Anbindung der Sicherungsvorrichtung (10) an dem hochklappbaren Teil, **dadurch gekennzeichnet, dass** die Sicherungsvorrichtung (10) an einem Grundkörper (12) des Teiles mindestens ein drehbewegliches Element (16) aufweist, an dem mindestens ein Stützelement (18A, 18B) angeordnet ist, und mindestens eine, an einer Karosserie (20) angeordnete Verriegelungsvorrichtung (32A, 32B) umfasst, wodurch das mindestens eine Stützelement (18A, 18B) nach einer Bewegung des hochklappbaren Teiles von einer Gebrauchslage in die Nichtgebrauchslage in eine karosserieseitige stufenartig angeordnete Ausbildung (22) eingreift und das hochgeklappte Teil abstützt und wodurch das hochgeklappte Teil über die mindestens eine Verriegelungsvorrichtung (32A, 32B) verriegelbar ist.

2. Sicherungsvorrichtung (10) nach Anspruch 1, **dadurch gekennzeichnet, dass** das mindestens eine drehbewegliche Element (16) ein erstes beziehungsweise zweites Drehgelenk oder Scharnier (16A, 16B) ist.

3. Sicherungsvorrichtung (10) nach Anspruch 1, **dadurch gekennzeichnet, dass** das in der Nichtgebrauchslage hochgeklappte Teil, ein Sitzteil (14) oder ein Sitzteil (14) mit einer zugeordneten Rückenlehne ist, an dessen Grundkörper (12) die Sicherungsvorrichtung (10) angeordnet ist.

4. Sicherungsvorrichtung (10) nach Anspruch 1, **dadurch gekennzeichnet, dass** die mindestens eine Verriegelungsvorrichtung (32A, 32B) zwischen einer Rückseite des Sitzteiles (14) und der stufenartigen Ausbildung (22) angeordnet ist.

5. Sicherungsvorrichtung (10) nach Anspruch 1, **dadurch gekennzeichnet, dass** das mindestens eine Stützelement (18A, 18B) an der dem, als drehbewegliches Element (16) ausgeführten, mindestens einen Gelenk oder Scharnier (16A, 16B) gegenüberliegenden Seite, mindestens ein Führungselement (30) aufweist.

6. Sicherungsvorrichtung (10) nach Anspruch 5, **dadurch gekennzeichnet, dass** das mindestens eine Führungselement (30) eine erste beziehungsweise zweite Rolle (30A, 30B) ist.

7. Sicherungsvorrichtung (10) nach Anspruch 1, **dadurch gekennzeichnet, dass** zwischen jeweils mindestens einem bauteilseitigen Festpunkt (26A, 26B) des Sitzteiles (14) und dem mindestens einen Stützelement (18A, 18B) mindestens ein Federelement (28A, 28B) angeordnet ist.

8. Sicherungsvorrichtung (10) nach Anspruch 7, **dadurch gekennzeichnet, dass** das mindestens eine Federelement (28A, 28B) während der Bewegung des Sitzteiles (14) von einer Gebrauchslage in die Nichtgebrauchslage des Kraftfahrzeugsitzes entspannt wird.

9. Sicherungsvorrichtung (10) nach Anspruch 1, **dadurch gekennzeichnet, dass** das mindestens eine Stützelement (18A, 18B) ein Bügel oder eine Stange oder dergleichen ist.

## Claims

1. Securing device (10) for positionally fixing at least one upwardly foldable part of a motor vehicle seat in a not-in-use position, with at least one connection of the securing device (10) to the upwardly foldable part, **characterized in that,** on a basic body (12) of the part, the securing device (10) has at least one rotatable element (16), on which at least one supporting element (18A, 18B) is arranged, and comprises at least one locking device (32A, 32B) which is arranged on the bodywork (20), as a result of which, after movement of the upwardly foldable part from a use position into the not-in-use position, the at least one supporting element (18A, 18B) engages in a formation (22) arranged in the manner of a step on the bodywork side and supports the upwardly folded part, and as a result of which the upwardly folded part can be locked via the at least one locking device (32A, 32B).

2. Securing device (10) according to Claim 1, **characterized in that** the at least one rotatable element (16) is a first and/or second rotary joint or hinge (16A, 16B).

3. Securing device (10) according to Claim 1, **characterized in that** the part which is upwardly folded in the not-in-use position is a seat part (14) or a seat part (14) with an associated backrest, on the basic body (12) of which the securing device (10) is arranged.

4. Securing device (10) according to Claim 1, **characterized in that** the at least one locking device (32A, 32B) is arranged between a rear side of the seat part (14) and the step-like formation (22).

5. Securing device (10) according to Claim 1, **characterized in that** the at least one supporting element (18A, 18B) has at least one guide element (30) on the side which is designed as a rotatable element (16) and is opposite at least one joint or hinge (16A, 16B).

6. Securing device (10) according to Claim 5, **characterized in that** the at least one guide element (30) is a first and/or second roller (30A, 30B).

7. Securing device (10) according to Claim 1, **characterized in that** at least one spring element (28A, 28B) is arranged between in each case at least one component-side fixed point (26A, 26B) of the seat part (14) and the at least one supporting element (18A, 18B).

8. Securing device (10) according to Claim 7, **characterized in that** the at least one spring element (28A, 28B) is relaxed during the movement of the seat part (14) from a use position into the not-in-use position of the motor vehicle seat.

9. Securing device (10) according to Claim 1, **characterized in that** the at least one supporting element (18A, 18B) is a bar or a rod.

## Revendications

1. Dispositif de sécurité (10) pour fixer sur place au moins une partie rabattable vers le haut d'un siège de véhicule automobile positionné dans une position de non utilisation, avec au moins une jonction du dispositif de sécurité (10) située au niveau de la partie rabattable vers le haut, **caractérisé en ce que** le dispositif de sécurité (10) comporte au niveau d'un corps de base (12) de la partie au moins un élément mobile en rotation (16) au niveau duquel au moins un élément d'appui (18A, 18B) est disposé, et comprenant au moins un dispositif de verrouillage (32A, 32B) disposé au niveau d'une carrosserie (20), l'au moins un élément d'appui (18A, 18B) s'engrenant après déplacement de la partie rabattable vers le haut d'une position d'utilisation jusqu'à la position de non utilisation dans une configuration (22) disposée en escalier du côté de la carrosserie et soutenant la partie rabattue vers le haut et la partie rabattue vers le haut étant verrouillable via l'au moins un dispositif de verrouillage (32A, 32B).

2. Dispositif de sécurité (10) selon la revendication 1, **caractérisé en ce que** l'au moins un élément mobile en rotation (16) est une première et/ou une deuxième articulation ou charnière (16A, 16B).

3. Dispositif de sécurité (10) selon la revendication 1, **caractérisé en ce que** la partie rabattue vers le haut dans la position de non utilisation est une partie de siège (14) ou une partie de siège (14) avec un accoudoir associé au niveau du corps de base (12) duquel le dispositif de sécurité (10) est disposé.

4. Dispositif de sécurité (10) selon la revendication 1, **caractérisé en ce que** l'au moins un dispositif de verrouillage (32A, 32B) est disposé entre un côté dos de la partie de siège (14) et la configuration (22) en escalier.

5. Dispositif de sécurité (10) selon la revendication 1, **caractérisé en ce que** l'au moins un élément d'appui (18A, 18B) comporte au moins un élément de guidage (30) au niveau du côté opposé à au moins une articulation ou une charnière (16A, 16B) prenant la forme d'un élément mobile en rotation (16).

6. Dispositif de sécurité (10) selon la revendication 5, **caractérisé en ce que** l'au moins un élément de guidage (30) est un premier et/ou un deuxième rouleau (30A, 30B).

7. Dispositif de sécurité (10) selon la revendication 1, **caractérisé en ce qu'**au moins un élément de ressort (28A, 28B) est disposé entre respectivement au moins un point fixe (26A, 26B) côté composant de la partie de siège (14) et l'au moins un élément d'appui (18A, 18B).

8. Dispositif de sécurité (10) selon la revendication 7, **caractérisé en ce que** l'au moins un élément de ressort (28A, 28B) est détendu pendant le déplacement de la partie de siège (14) d'une position d'utilisation jusqu'à la position de non utilisation du siège de véhicule automobile.

9. Dispositif de sécurité (10) selon la revendication 1, **caractérisé en ce que** l'au moins un élément d'appui (18A, 18B) est équivalent à un étrier, à une tige ou à leur équivalent.
